(19) Europäisches Patentamt

European Patent Office

Office européen des brevets

(11) **EP 1 120 383 A2**

(12) **DEMANDE DE BREVET EUROPEEN**

(43) Date de publication:
**01.08.2001 Bulletin 2001/31**

(51) Int Cl.⁷: **C03C 17/36**, G02B 5/28

(21) Numéro de dépôt: **01107328.5**

(22) Date de dépôt: **05.11.1996**

(84) Etats contractants désignés:
**AT BE CH DE ES FI FR GB IT LI NL**

(30) Priorité: **10.11.1995  DE 19541937**

(62) Numéro(s) de document de la (des) demande(s)
initiale(s) en application de l'article 76 CBE:
**96402346.9 / 0 773 197**

(71) Demandeur: **SAINT-GOBAIN GLASS FRANCE**
**92400 Courbevoie (FR)**

(72) Inventeurs:
• **Glaser, Hans**
**51643 Gummersbach (DE)**

• **Heinz, Bernhard**
**52074 Aachen (DE)**

(74) Mandataire: **Renous Chan, Véronique et al**
**Saint-Gobain Recherche,**
**39, Quai Lucien Lefranc**
**93300 Aubervilliers (FR)**

Remarques:
Cette demande a été déposée le 24.03.2001 comme
demande divisionnaire de la demande mentionnée
sous le code INID 62.

(54) **Substrats revetus d'un empilement de couches minces, a proprietes de reflexion dans l'infrarouge et/ou sur le rayonnement solaire**

(57)   L'invention a pour objet un substrat transparent, notamment en verre, muni d'un empilement de couches minces comportant au moins une couche « fonctionnelle » à propriétés dans l'infrarouge et/ou vis-à-vis du rayonnement solaire, notamment métallique et bas-émissive, disposée entre deux revêtements à base de matériau diélectrique « inférieur » et « supérieur ».

Ledit revêtement « inférieur » sous-jacent à la couche à propriétés dans l'infrarouge comporte au moins deux couches en matériau diélectrique différentes, dont au moins une couche d'oxyde ou de nitrure de métal ou de silicium et une couche à base d'oxyde de zinc d'épaisseur supérieure ou égale à 16 nm et en contact direct avec la couche fonctionnelle.

EP 1 120 383 A2

## Description

L'invention concerne les substrats transparents, notamment en verre ou en matériau plastique rigide du type polycarbonate PC ou polyméthacrylate de méthyle PMMA, et qui sont revêtus d'un empilement de couches minces comprenant au moins une couche métallique pouvant agir sur le rayonnement solaire et/ou sur le rayonnement infrarouge de grande longueur d'onde.

L'invention concerne également l'utilisation de tels substrats pour fabriquer des vitrages d'isolation thermique et/ou de protection solaire. Ceux-ci sont destinés aussi bien à équiper des bâtiments que des véhicules, en vue notamment de diminuer l'effort de climatisation et/ou de réduire une surchauffe excessive entraînée par l'importance toujours croîssante des surfaces vitrées dans l'habitacle.

Un type d'empilement de couches minces connu destiné à conférer au substrat des propriétés notamment de bas-émissivité est constitué d'au moins une couche métallique telle qu'une couche d'argent disposée entre deux couches de matériau diélectrique telles que des couches d'oxyde métallique ou de nitrure tel que $Si_3N_4$. Cet empilement est généralement obtenu par une succession de dépôts effectués par une technique utilisant le vide, comme la pulvérisation cathodique éventuellement assistée par champ magnétique. En général, la couche d'argent est recouverte, préalablement au dépôt du revêtement diélectrique supérieur, d'une fine couche de métal dite « sacrificielle ».

Si la couche d'argent détermine essentiellement les performances thermiques, notamment en terme d'émissivité du vitrage revêtu, les couches de matériau diélectrique remplissent plusieurs rôles puisqu'elles agissent tout d'abord sur l'aspect optique du substrat de manière interférentielle. Elles permettent en outre de protéger la couche d'argent des agressions chimiques et/ou mécaniques.

Les vitrages pourvus de ce type d'empilement à faible émissivité trouvent donc leur application en particulier dans les vitrages isolants. Dans le cas d'une structure prédéfinie d'un vitrage isolant, le coefficient de transmission thermique est en effet déterminé essentiellement par l'émissivité des deux surfaces de verre délimitant l'espace entre les feuilles de verre, L'émissivité $\varepsilon$ de surfaces de verre non revêtues est relativement élevé et est d'environ 0,85. L'échange de rayonnement entre les surfaces de verre peut être à peu près supprimé par l'utilisation de feuilles de verre munies d'un revêtement faiblement émissif ayant une émissivité $\varepsilon \leq 0,1$ sur la face tournée vers l'espace de gaz intermédiaire. De cette façon il est possible de fabriquer des vitrages isolants ayant un coefficient K de transfert thermique de 1,3 W/m$^2$K sinon moins, valeurs faibles grâce auxquelles des efforts d'économie d'énergie sensibles peuvent être atteints. Outre un coefficient K faible, un vitrage isolant optimal doit aussi présenter un facteur solaire, exprimé par un coefficient G tel que défini dans la norme DIN 67507 aussi grand que possible, afin que l'utilisation passive de l'énergie solaire soit élevée et qu'ainsi le bilan énergétique d'un bâtiment soit favorable. Ce coefficient G est la somme de l'énergie transmise directement à travers le vitrage et de l'énergie réémise vers l'intérieur de la pièce ou de l'habitacle par le vitrage s'échauffant par absorption. En outre, la couleur en réflexion de ce vitrage vers l'espace extérieur doit être neutre comme celle du vitrage isolant classique.

Une diminution de l'émissivité d'un empilement de couches comprenant une couche fonctionnelle en argent peut être atteinte en principe au moyen de couches d'argent plus épaisses. Des limites sont toutefois imposées à une augmentation de l'épaisseur de la couche d'argent par la transmission lumineuse qui, alors, diminue. A cela s'ajoute le fait que les couches d'argent épaisses peuvent ne plus être de couleur neutre en réflexion. Si on veut néanmoins obtenir une émissivité faible avec des couches d'argent relativement épaisses, tout en conservant une transmission lumineuse suffisamment élevée et simultanément une couleur en réflexion neutre, cela n'est possible qu'à condition de choisir convenablement les revêtements de matériau diélectrique, notamment en les constituant de plusieurs couches de matériau diélectrique différentes.

Un système à plusieurs couches du genre décrit ci-dessus au moyen duquel les propriétés optiques souhaitées peuvent être atteintes, est connu d'après le document EP-0-332 177 B1, Dans ce système à couches connu, l'un des deux revêtements diélectrique consiste en une ou plusieurs couches ayant chacune un indice de réfraction d'environ 2,35 et l'autre revêtement consiste en une ou plusieurs couches ayant un indice de réfraction nettement plus faible. L'oxyde de bismuth sert de couche à indice de réfraction de 2,35.

Un système à revêtements de matériau diélectrique « multi-couches » est également connu des brevets DE 3 941 027 A1 et FR-2 641 271. Dans cet empilement, le revêtement diélectrique « inférieur », (c'est-à-dire le plus proche du substrat) consiste en au moins une couche d'un oxyde métallique appartenant à la classe formée par l'oxyde d'étain, l'oxyde de titane, l'oxyde d'aluminium, l'oxyde de bismuth et un mélange de deux ou de plusieurs de ces oxydes, et en une couche d'oxyde de zinc d'une épaisseur de 15 nm au maximum et de préférence de 5 à 13 nm, contiguë à la couche d'argent. La couche mince d'oxyde de zinc sous la couche d'argent est dite exercer sur la couche d'argent un effet favorable qui ne peut cependant être observé que lorsque l'épaisseur de la couche d'oxyde de zinc se situe en dessous d'une valeur tolérable maximale de 15 nm. Les couches de ZnO plus épaisses sont dites, toujours d'après ces documents, être plus fragiles chimiquement et, de fait, conduisent alors à diminuer la durabilité de l'empilement de couches minces dans son ensemble.

Le but de l'invention est alors de mettre au point un nouveau type d'empilement à couche(s) fonctionnelle(s) qui présente à la fois de propriétés thermiques et optiques améliorées, et tout particulièrement à la fois une faible émissivité et une haute transmission lumineuse.

L'invention a plus particulièrement pour but le développement de ce type d'empilement de couches minces et qui comprend une couche d'oxyde de zinc disposée sous la couche d'argent, qui, d'une part, exploite les effets favorables de la couche d'oxyde de zinc et, d'autre part, permette d'obtenir simultanément une haute résistance chimique et physique, de même qu'une faible émissivité et une haute transmission énergétique totale ainsi qu'une haute neutralité de couleur en transmission et en réflexion. De préférence, le but de l'invention est également qu'un tel empilement puisse être produit industriellement, sans difficulté technique de fabrication, à des vitesses de dépôt élevées, notamment suivant le procédé de pulvérisation cathodique éventuellement assistée par champ magnétique.

L'invention a pour objet un substrat transparent, notamment en verre (ou tout autre matériau plastique rigide du type polycarbonate ou PMMA) qui est muni d'un empilement de couches minces comportant au moins une couche à propriétés dans l'infrarouge et/ou vis-à-vis du rayonnement solaire, notamment métallique et bas-émissive. On la désigne ci-après sous le terme de couche « fonctionnelle », elle est notamment en argent ou à base d'argent.

Cette couche fonctionnelle est disposée entre deux revêtements en matériau diélectrique, un revêtement dit « inférieur », le plus proche du substrat, et un revêtement dit « supérieur », le plus éloigné dudit substrat. Le revêtement sous-jacent à la couche fonctionnelle, donc le revêtement « inférieur », comporte au moins deux couches en matériau diélectrique différents dont au moins une couche d'oxyde ou de nitrure de métal ou de silicium et une couche à base d'oxyde de zinc d'épaisseur supérieure ou égale à 16 nm et en contact direct avec la couche fonctionnelle.

Selon l'invention, la couche fonctionnelle est de préférence à base d'argent, et notamment d'une épaisseur comprise entre 7 et 25 nm, de préférence 10 à 14 nm et plus particulièrement d'environ 12 nm.

La couche à base d'oxyde de zinc du revêtement « inférieur » est de préférence d'une épaisseur choisie entre 16 et 35 nm, notamment entre 16 et 25 nm, plus particulièrement d'environ 22 nm.

Le revêtement « inférieur » comporte de préférence sous cette couche d'oxyde de zinc une autre couche à base d'oxyde métallique du type oxyde de bismuth, oxyde d'étain, ou de nitrure de silicium. Cette seconde couche présente avantageusement une épaisseur de 5 à 35 nm, de préférence de 15 à 25 nm.

La couche fonctionnelle, optionnellement, peut être surmontée d'une fine couche dite sacrificielle à base de métal du type niobium, titane, étain, tantale ou alliage métallique du type nickel-chrome, tantale-chrome, niobium-chrome, notamment d'une épaisseur comprise entre 0,5 et 6 nm, de préférence entre 1 et 3 nm. Elle est dite « sacrificielle », car son rôle est de protéger la couche fonctionnelle de l'oxydation lors du dépôt ultérieur du matériau diélectrique au-dessus d'elle, dépôt effectué usuellement par une pulvérisation cathodique réactive, c'est-à-dire en présence d'oxygène s'il s'agit d'un oxyde métallique. Dans le produit final, cette couche sacrificielle est donc, selon son épaisseur et les conditions de dépôt, partiellement ou complètement oxydée.

Le revêtement de matériau diélectrique « supérieur » qui se trouve au-dessus de la couche fonctionnelle, comporte avantageusement au moins une couche à base d'oxyde d'étain, d'oxyde de tantale, d'oxyde de zinc, d'oxyde de niobium, d'oxyde de titane ou d'oxyde de bismuth et/ou une couche de nitrure de silicium.

Ce revêtement « supérieur » comprend avantageusement au moins une couche à base d'oxyde d'étain, notamment d'une épaisseur comprise entre 2 et 35 nm, de préférence entre 5 et 30 nm, et une couche à base d'oxyde de bismuth, notamment d'une épaisseur comprise entre 5 et 35 nm, et de préférence entre 15 et 30 nm.

La couche à base d'oxyde d'étain précédente est notamment choisie d'une épaisseur de 5 à 25 nm, notamment entre 5 et 15 nm. Il en est de même pour la couche à base d'oxyde de bismuth.

L'invention, pour le revêtement « supérieur », propose deux variantes : soit la couche d'oxyde de bismuth est située au-dessus de la couche d'oxyde d'étain, soit c'est la couche d'oxyde d'étain qui est située au-dessus de la couche d'oxyde de bismuth.

Le revêtement « supérieur » peut avantageusement comprendre une pluralité de couches dont la dernière présente une durabilité accrue, Il peut notamment s'agir d'une couche à base d'oxyde de titane, Son épaisseur est choisie de préférence entre 3 et 10 nm.

L'invention a également pour objet les vitrages multiples du type isolants, bas-émissifs incorporant au moins un substrat revêtu d'un tel empilement. S'il s'agit d'un double-vitrage, l'empilement de couches est de préférence disposé en face 3 et/ou en face 2, tandis que s'il s'agit d'un triple-vitrage, on peut envisager d'avoir un empilement en face 3, en face 5 ou sur ces deux faces. (On rappelle que, conventionnellement, on numérote les faces à partir de l'extérieur, une fois le vitrage monté).

L'invention concerne aussi les vitrages feuilletés incorporant au moins un substrat revêtu d'un tel empilement de couches. Ils peuvent alors être avantageusement utilisés comme vitrages anti-solaires, et sont tout particulièrement utiles pour équiper des automobiles, vu leur haute transmission lumineuse. On peut aussi les utiliser en tant que vitrages chauffants, en prévoyant des amenées de courant pour les couches à propriétés dans l'infrarouge du type argent. En effet, de telles couches, à faible émissivité, présentent également une forte conductivité électrique.

L'utilisation des substrats selon l'invention est ainsi très variée, puisqu'ils peuvent intervenir aussi bien dans la fabrication de vitrages multiples isolants que dans celle de vitrages feuilletés,

On peut ainsi fabriquer des double-vitrages dont l'émissivité est inférieure ou égale à 0,05, notamment inférieure à 0,045 et dont la transmission lumineuse reste néanmoins très élevée ; celle-ci peut en effet être supérieure ou égale à 75%. Ces double-vitrages peuvent également présenter un coefficient K d'environ 1,1 W/m$^2$K et/ou un facteur G d'environ 58 à 60%.

Il va de soi que l'on peut aussi avantageusement appliquer l'invention à des substrats présentant non pas une mais plusieurs couches fonctionnelles, par exemple deux couches fonctionnelles intercalées entre trois revêtements à base de matériau diélectrique. On munit alors au moins une des couches fonctionnelles du revêtement « inférieur » selon l'invention. Les épaisseurs des couches d'argent et les épaisseurs globales des revêtements diélectriques de part et d'autre de celles-ci peuvent avantageusement être choisies dans les gammes préconisées dans le demande de brevet EP-0 638 528.

(Selon la terminologie de la présente demande, le revêtement « supérieur » sur la couche d'argent la plus proche du substrat sera en fait le revêtement diélectrique séparant les deux couches d'argent).

Revenons plus en détails sur la structure d'empilements selon l'invention.

Selon un mode préféré, la structure conforme à l'invention de l'empilement se caractérise en ce que les deux couches d'oxyde métallique du revêtement inférieur consistent en une couche d'oxyde de bismuth d'une épaisseur de 15 à 25 nm et en une couche d'oxyde de zinc de 16 à 22 nm contiguë à la couche d'argent et en ce que les deux couches d'oxyde métallique du revêtement supérieur consistent en une couche d'oxyde d'étain d'une épaisseur de 5 à 30 nm et de préférence de 5 à 25 nm et en une couche d'oxyde de bismuth d'une épaisseur de 15 à 30 nm et de préférence de 15 à 25 nm.

Les couches d'oxyde de bismuth ne doivent pas nécessairement consister en oxyde de bismuth pur. Elles peuvent, le cas échéant aussi contenir de faibles quantités d'autres oxydes métalliques ou composés métalliques à la condition que les propriétés optiques et en particulier l'indice de réfraction de ces couches ne soient dès lors pas sensiblement modifié. Il en est de même pour toutes les autres couches des revêtements en matériau diélectrique, notamment pour les couches à base de ZnO.

Il s'est avéré en fait, de manière surprenante, que les inconvénients relatifs à un affaiblissement physique de la couche d'argent, qui ont pour conséquence une résistance chimique atténuée, et qui sont escomptés lors d'une augmentation de l'épaisseur de la couche d'oxyde de zinc, sous la couche d'argent ne se manifestent pas, contrairement aux prévisions, lorsque l'empilement de couches a la structure conforme à l'invention. En particulier, il s'est avéré que la croissance cristalline de la couche d'oxyde de zinc qui se manifeste avec des couches d'oxyde de zinc d'une épaisseur supérieure à 15 nm est finalement très avantageuse pour l'émissivité de la couche d'argent. Il semble, en effet, que, grâce à une couche d'oxyde de zinc au moins partiellement cristalline, l'argent pulvérisé par la suite croît également sensiblement à l'état cristallin. Une structure cristalline de la couche d'argent conduit à une mobilité accrue des porteurs de charge et ainsi à une nouvelle diminution de l'émissivité $\varepsilon$ du fait que l'émissivité $\varepsilon$ est en relation proportionnelle inverse de la mobilité $\mu$ des électrons dans la couche d'argent, conformément à la relation mathématique

$$\varepsilon \; = \; \int \left( \frac{1}{e \cdot n \cdot \mu \cdot d} \right)$$

où e est une constante pour la charge élémentaire,
n est la densité des porteurs de charge,
$\mu$ est la mobilité des porteurs de charge, et
d est l'épaisseur de la couche d'argent.

Simultanément, il est acquis par l'utilisation d'un revêtement « inférieur » combinant une couche d'oxyde de bismuth ayant un indice de réfraction élevé avec une couche ayant un indice de réfraction faible formée d'oxyde de zinc que l'empilement confère au substrat dans son ensemble, une couleur en transmission et une couleur en réflexion très neutres qui ne se modifient pas, même lors de faibles variations des épaisseurs de couches dans le domaine des tolérances de fabrication. Cette neutralité est d'autant plus marquée lorsqu'on utilise, en tant que revêtement « supérieur » également l'association d'une couche d'oxyde de bismuth avec une couche d'indice plus faible du type SnO$_2$.

Enfin, la structure des couches conforme à l'invention, selon son mode de réalisation préféré utilisant une couche à base d'oxyde de bismuth de part et d'autre de la couche fonctionnelle, mène à l'avantage supplémentaire que, grâce à cette couche de matériau à haut indice de réfraction, au-dessus et en dessous de la couche d'argent, on exerce un effet optimal de couleur neutre sur la couche d'argent, même lorsque la couche d'argent est appliquée en une épaisseur ≥ 12 nm, ce qui s'avère favorable pour l'obtention d'une émissivité aussi faible que possible : on parvient ainsi à concilier les objectifs de colorimétrie et ceux liés aux performances thermiques du substrat revêtu.

Dans le revêtement « supérieur », comme déjà vu, la couche d'oxyde de bismuth à haut indice de réfraction peut être disposée soit entre la couche sacrificielle et la couche d'oxyde d'étain, soit aussi par-dessus la couche d'oxyde d'étain. Il s'est avéré que chacune de ces deux dispositions possibles offre des avantages spéciaux qu'on peut exploiter pour l'amélioration des propriétés de l'empilement de couches dans le sens souhaité dans chaque cas. Ainsi, on peut citer par exemple, l'effet exercé sur le coefficient G, qui est plus élevé lorsque la couche d'oxyde de bismuth est voisine de la couche d'argent, tandis qu'une résistance chimique particulièrement élevée de l'empilement de couches est obtenue par la disposition de la couche d'oxyde d'étain comme couche supérieure.

D'autre part, la disposition de la couche d'oxyde de bismuth au-dessus de la couche d'oxyde d'étain offre l'avantage que le risque d'une oxydation de l'argent par échange possible entre la couche d'oxyde de bismuth et la couche d'argent est plus faible, de sorte que, dans ce cas, la couche de métal sacrificielle peut être choisie plus mince. D'autre part, des mesures pour éviter la « solarisation » connue peuvent être omises. Par « solarisation » on entend le noircissement de la couche d'argent sous l'influence du rayonnement UV, qui peut apparaître lorsque la couche d'oxyde de bismuth est contiguë à la couche d'argent.

Comme couche de métal sacrificielle, on peut utiliser en principe les métaux connus et habituels à cet effet, ayant pour l'oxygène une affinité plus élevée que celle de l'argent, qui sont déposés sous forme métallique ou sous-oxydée sur la couche d'argent. Une couche de nickel-chrome d'une épaisseur de 1 à 3 nm s'est révélée particulièrement efficace.

Le procédé suivant lequel l'empilement de couches est appliqué sur le substrat, ne joue fondamentalement aucun rôle décisif pour les propriétés optiques du système de couches conforme à l'invention. Dans les exemples donnés ci-après, les couches sont cependant sans exception déposées suivant le procédé de pulvérisation cathodique et il semble que dans l'ensemble, les meilleurs résultats soient obtenus au moyen de ce procédé dans les conditions industrielles.

Des exemples d'exécution préférés pour les empilements de couches conformes à l'invention sont donnés ci-après.

## EXEMPLE D'EXECUTION 1

Verre

| | |
|---|---|
| $Bi_2O_3$ | 20 nm |
| ZnO | 16 nm |
| Ag | 12 nm |
| NiCr (60/40) | 2 nm |
| $SnO_2$ | 12 nm |
| $Bi_2O_3$ | 20 nm |

L'élaboration des systèmes de couches est effectuée dans une installation de revêtement continu par pulvérisation cathodique assistée par champ magnétique, les couches d'oxyde étant pulvérisées de manière connue, de façon réactive c'est-à-dire dans une atmosphère d'argon contenant de l'oxygène à partir de cibles métalliques. La pulvérisation de la couche d'argent métallique a lieu dans une atmosphère d'argon avec une addition de 5% en volume d'hydrogène et la pulvérisation de la couche de métal sacrificielle, dans de l'argon pur. La feuille de verre est un verre clair silico-sodo-calcique flotté d'une épaisseur de 4 mm.

La feuille de verre ainsi revêtue présente les propriétés optiques suivantes :

| | |
|---|---|
| ε (émisssivité) | 0,03 |
| Transmission lumineuse suivant DIN 67507 | 77% |

Un vitrage isolant constitué de deux feuilles de verre revêtues de la sorte et comportant un espace gazeux intermédiaire de 16 mm, dans lequel l'espace gazeux intermédiaire est rempli d'argon et les surfaces de verre revêtues sont orientées vers l'espace gazeux intérieur, présente un coefficient G suivant la norme DIN 67507 de 58% et un coefficient K suivant la norme DIN 52612 de 1,1 W/m$^2$K.

## EXEMPLE D'EXECUTION 2

On revêt une même feuille de verre flotté d'une épaisseur de 4 mm de l'empilement suivant :

| Verre | |
|---|---|
| $Bi_2O_3$ | 19 nm |
| ZnO | 18 nm |
| Ag | 12 nm |
| NiCr | 2 nm |
| $SnO_2$ | 10 nm |
| $Bi_2O_3$ | 18 nm |
| $TiO_2$ | 6 nm |

La couche de couverture de $TiO_2$ sert dans ce cas de couche protectrice de l'empilement de couches. Du fait que le $TiO_2$ présente environ les mêmes propriétés optiques que la couche de $Bi_2O_3$ sous-jacente, l'épaisseur de la couche de $Bi_2O_3$ diminue d'autant de la valeur de l'épaisseur de la couche de $TiO_2$. L'épaisseur optique de la séquence $Bi_2O_3/TiO_2$ reste ainsi constante, (l'épaisseur optique d'une couche est le produit de son épaisseur géométrique par son indice de réfraction). La résistance à la corrosion de l'empilement de couches est notablement augmentée par la couche de dioxyde de titane.

Cette feuille de verre revêtue présente les propriétés optiques suivantes :

| ε | 0,03 |
|---|---|
| Transmission lumineuse suivant DIN 67507 | 77% |

Un vitrage isolant formé à partir de ces feuilles de verre revêtues et ayant la même structure et le même remplissage d'argon que dans l'exemple 1 présente un coefficient G suivant la norme DIN 67507 de 58% et un coefficient K suivant la norme DIN 52612 de 1,1 W/m²K.

## EXEMPLE D'EXECUTION 3

On applique sur la même feuille de verre flotté d'une épaisseur de 4 mm, une couche multiple ayant la structure suivante :

| Verre | |
|---|---|
| $Bi_2O_3$ | 19 nm |
| ZnO | 16 nm |
| Ag | 12 nm |
| NiCr | 2 nm |
| $Bi_2O_3$ | 17 nm |
| $SnO_2$ | 25 nm |

La mesure des propriétés optiques de la feuille de verre revêtue donne les résultats suivants :

| s | 0,03 |
|---|---|
| Transmission lumineuse suivant DIN 67507 | 77% |

Un vitrage isolant formé comme dans les exemples précédents à partir de deux feuilles de verre revêtues de cette façon avec un remplissage d'argon présente un coefficient G suivant la norme DIN 67507 de 60%, et un coefficient K suivant la norme DIN 52612 de 1,1 W/m²K.

## Revendications

1. Substrat transparent, notamment en verre, muni d'un empilement de couches minces comportant au moins une couche « fonctionnelle » à propriétés dans l'infrarouge et/ou vis-à-vis du rayonnement solaire, notamment métallique et bas-émissive, disposée entre deux revêtements à base de matériau diélectrique « inférieur » et « supérieur », **caractérisé en ce que** le revêtement « inférieur » sous-jacent à la couche à propriétés dans l'infrarouge comporte au moins deux couches en matériau diélectrique différentes, dont au moins une couche de nitrure de métal ou de silicium et une couche à base d'oxyde de zinc d'épaisseur supérieure ou égale à 16 nm et en contact direct avec la couche fonctionnelle.

2. Substrat selon la revendication 1, **caractérisé en ce que** la couche à propriétés dans l'infrarouge est à base d'argent, notamment d'épaisseur comprise entre 7 et 25 nm, de préférence entre 10 et 14 nm.

3. Substrat selon l'une des revendications 1 ou 2, **caractérisé en ce que** dans le revêtement « inférieur » la couche à base d'oxyde de zinc est d'épaisseur comprise entre 16 et 35 nm, notamment entre 16 et 25 nm, notamment d'environ 22 nm.

4. Substrat selon l'une des revendications précédentes, **caractérisé en ce que** le revêtement en matériau diélectrique « inférieur » comporte sous la couche d'oxyde de zinc une couche à base de nitrure de silicium du type $Si_3N_4$, notamment d'une épaisseur comprise entre 5 et 35 nm, de préférence entre 15 et 25 nm.

5. Substrat selon l'une des revendications précédentes, **caractérisé en ce que** la couche fonctionnelle est recouverte d'une couche sacrificielle base de métal tel que le niobium, le titane, l'étain, le tantale ou d'alliage métallique tel que du nickel-chrome, du tantale-chrome ou du niobium-chrome, notamment d'une épaisseur comprise entre 0,5 et 6 nanomètres, de préférence entre 1 et 3 nm.

6. Substrat selon l'une des revendications précédentes, **caractérisé en ce que** le revêtement à base de matériau diélectrique « supérieur » au-dessus de la couche fonctionnelle comporte au moins une couche mince d'oxyde métallique, choisie dans le groupe de l'oxyde d'étain, l'oxyde de zinc, l'oxyde de niobium, l'oxyde de titane, l'oxyde de tantale, l'oxyde de bismuth et/ou une couche de nitrure de silicium.

7. Substrat selon la revendication 6, **caractérisé en ce que** le revêtement diélectrique « supérieur » comprend au moins une couche à base d'oxyde d'étain, notamment d'une épaisseur comprise entre 2 et 35 nm, de préférence entre 5 et 30 nm, et une couche à base d'oxyde de bismuth, notamment d'une épaisseur comprise entre 5 et 35 nm, de préférence entre 15 et 30 nm.

8. Substrat selon la revendication 7, **caractérisé en ce que** la couche à base d'oxyde d'étain du revêtement en matériau diélectrique « supérieur » est d'une épaisseur comprise entre 5 et 25 nm, notamment entre 5 et 15 nm, **et en ce que** la couche d'oxyde de bismuth dudit revêtement est d'une épaisseur comprise entre 5 et 15 nm.

9. Substrat selon l'une des revendications 7 ou 8, **caractérisé en ce que** la couche d'oxyde de bismuth est située au-dessus de la couche d'oxyde d'étain dans le revêtement en matériau diélectrique « supérieur ».

10. Substrat selon l'une des revendications 7 ou 8, **caractérisé en ce que** la couche d'oxyde d'étain est située au-dessus de la couche d'oxyde de bismuth dans le revêtement en matériau diélectrique « supérieur ».

11. Substrat selon l'une des revendications précédentes, **caractérisé en ce que** le revêtement de matériau diélectrique comprend une pluralité de couches minces dont la dernière présente une durabilité accrue, notamment à base d'oxyde de titane, de préférence d'une épaisseur comprise entre 3 et 10 nm.

12. Substrat selon l'une des revendications précédentes, **caractérisé en ce qu'il** est muni d'un empilement de couches minces comportant deux couches « fonctionnelles ».

13. Vitrage multiple bas-émissif, **caractérisé en ce qu'il** incorpore au moins un substrat selon l'une des revendications précédentes.

14. Double vitrage bas-émissif, **caractérisé en ce qu'il** incorpore un substrat selon l'une des revendications précédentes 1 à 12, **et en ce qu'il** présente une émissivité inférieure ou égale à 0.05, notamment inférieure à 0.045 et une transmission lumineuse $T_L$ supérieure ou égale à 75%.

15. Double vitrage bas-émissif, **caractérisé en ce qu'il** incorpore un substrat selon l'une des revendications 1 à 12, ***et en ce qu'il*** présente un facteur K d'environ 1.1 Wm$^2$K et/ou un facteur G d'environ 58 à 60%.